# DEMANDE DE BREVET EUROPEEN

(11) **EP 1 986 137 A2**
(43) Date de publication de la demande: **29.10.2008**
(21) Numéro de dépôt: 08000427.8
(22) Date de dépôt: 11.01.2008
(51) Int. Cl.: G06K 19/073

(54) **Procede et dispositif de verification de l'integrite d'un signal logique, notamment un signal d'horloge**

(30) Priorité: 29.01.2007 FR 0700594
(71) Demandeur: STMicroelectronics SA, 92120 Montrouge (FR)
(72) Inventeur: Bancel, Frederic, 13113 Lamanon (FR); Berard, Nicolas, Le Puits Sainte Marie 13530 Trets (FR); Roquelaure, Philippe, 13320 Bouc Bel Air (FR)
(74) Mandataire: Marchand, André

(57) **Abrégé**

L'invention concerne un dispositif et un procédé de détection d'une accélération d'un signal logique (CK) se traduisant par un rapprochement, au-delà d'un seuil de rapprochement, de deux fronts de variation du signal logique. Selon l'invention, un premier bit de contrôle (QA) et un second bit de contrôle (QB) sont prévus. A chaque front du signal logique, la valeur du premier bit de contrôle (QA) est inversée après un premier délai (DLY1) et la valeur du second bit de contrôle (QB) est inversée après un second délai (DLY2). Une accélération est détectée quand les deux bits de contrôle présentent en même temps leurs valeurs initiales respectives ou leurs valeurs initiales respectives inversées. Application notamment à la détection des injections d'erreur dans un circuit intégré sécurisé.

## Description

La présente invention concerne un procédé et un dispositif de vérification de l'intégrité d'un signal logique, notamment un signal d'horloge.

La présente invention concerne plus particulièrement un procédé et un dispositif de détection d'une accélération parasite d'un signal logique se traduisant par un rapprochement au-delà d'un seuil de rapprochement d'au moins deux fronts de variation d'un type déterminé du signal logique.

Les circuits logiques présents dans les circuits intégrés sécurisés, comme les circuits intégrés pour cartes à puce, font l'objet de diverses attaques de la part de fraudeurs qui cherchent à découvrir leur structure et/ou les secrets qu'ils comprennent. Il s'agit par exemple de circuits de cryptographie de type DES, AES, RSA..., de microprocesseurs programmés pour exécuter des algorithmes de cryptographie, de banques de registres contenant des clefs secrètes, etc.

A l'heure actuelle, les méthodes de piratage les plus avancées consistent à injecter des erreurs dans un circuit intégré lors de l'exécution d'opérations dites sensibles, par exemple des opérations d'authentification ou des opérations d'exécution d'un algorithme de cryptographie.

De telles attaques, appelées attaques par injection d'erreur ou injection de faute, peuvent intervenir pendant des phases de calculs dits sensibles, par exemple pendant des phases de calcul d'un code d'identification ou pendant la lecture d'une clef de cryptographie dans une mémoire. Elles permettent, en combinaison avec des modèles mathématiques et à partir de résultats faux obtenus intentionnellement grâce à des perturbations, de définir un élément secret comme une clef de cryptage ou un mot de passe, de déduire la structure d'un algorithme de cryptographie et/ou les clefs secrètes que l'algorithme utilise, etc.

En particulier, les attaques localisées consistent à introduire des perturbations en un point déterminé du circuit, par exemple au moyen d'un faisceau laser ou un faisceau de rayon X. Une attaque localisée peut concerner la tension d'alimentation, un chemin de données, ou le signal d'horloge du circuit intégré.

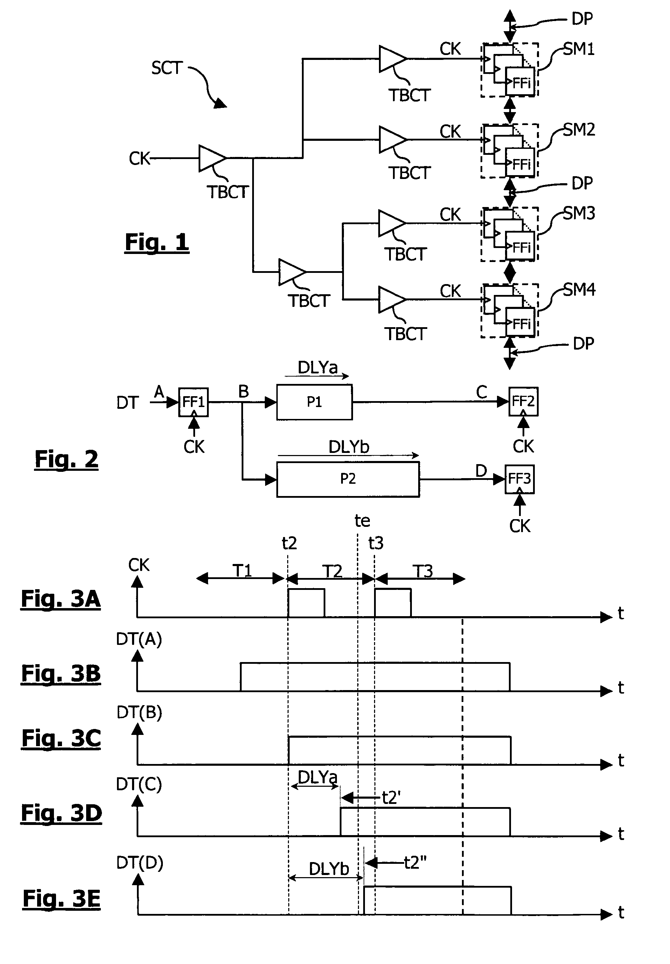

La présente invention concerne notamment la protection des circuits synchrones contre des attaques par injection d'erreur localisée dans le signal d'horloge. La figure 1 représente schématiquement un circuit synchrone SCT comprenant quatre modules synchrones SM1, SM2, SM3, SM4 cadencés par un signal d'horloge CK. Les modules synchrones SM1-SM4 sont schématisés sous forme de blocs comprenant chacun un ensemble de bascules synchrones FFi, et reçoivent chacun le signal d'horloge CK à travers des chemins de conduction de différentes longueurs formant un arbre d'horloge. Chaque module synchrone est également connecté à un ou plusieurs chemins de données DP pouvant être communs à d'autres modules. Au moment de la conception du circuit SCT, l'arbre d'horloge est équilibré au moyen de circuits à retard TBCT, par exemple des circuits tampon ("buffers") formés par des portes logiques inverseuses. L'équilibrage de l'arbre d'horloge est effectué de manière que les fronts de variation du signal d'horloge CK soit sensiblement en phase à l'entrée de chaque module.

En raison de son effet sur les transitions de données dans les divers modules synchrones, le signal d'horloge CK est particulièrement vulnérable aux injections d'erreur. Cette vulnérabilité réside dans le fait qu'une attaque peut permettre de transférer une donnée dans des bascules dont l'entrée est connectée à un chemin de données à faible temps de propagation alors que des bascules dont l'entrée est connectée à un chemin de données ayant un temps de propagation plus long n'ont pas encore reçu la donnée.

Ce problème est illustré sur la figure 2 ainsi que par des chronogrammes représentés sur les figures 3A à 3E. La figure 2 représente un circuit synchrone quelconque présent dans l'un quelconque des modules synchrones SM1-SM4. Le circuit synchrone comprend trois bascules FF1, FF2, FF3 cadencées ("clocked") par des fronts montants du signal d'horloge CK, qui est représenté sur la figure 3A. Le circuit synchrone comprend également un chemin de données asynchrone P1 reliant la sortie de la bascule FF1 à l'entrée de la bascule FF2, et un chemin de données asynchrone P2 reliant la sortie de la bascule FF1 à l'entrée de la bascule FF3. Chaque chemin de données P1, P2 comprend classiquement une pluralité de portes logiques asynchrones (non représentées). Chaque chemin de données P1, P2 présente ainsi un temps de propagation ou retard qui lui est propre, respectivement DLYa, DLYb, en ce qui concerne la transmission, à l'entrée de la bascule correspondante FF2, FF3, d'une donnée fournie par la bascule FF1.

Lorsqu'une donnée DT est appliquée à l'entrée de la bascule FF1, par exemple au cours d'un cycle T1 du signal d'horloge CK, la donnée est recopiée par la sortie de la bascule au cours d'un cycle T2 puis se propage jusqu'aux entrées des bascules FF2, FF3 pour être recopiée par les sorties des bascules FF2, FF3 au cours d'un cycle T3. La propagation de la donnée est illustrée par les figures 3B à 3E. Le chronogramme de la figure 3B représente la donnée DT(A) en un point "A" situé à l'entrée de la bascule FF1, le chronogramme de la figure 3C représente la donnée DT(B) en un point "B" situé à la sortie de la bascule FF1, le chronogramme de la figure 3D représente la donnée DT(C) en un point "C" situé à l'entrée de la bascule FF2, et le chronogramme de la figure 3E représente la donnée DT(D) en un point "D" situé à l'entrée de la bascule FF3.

La donnée DT est fournie au point B par la bascule FF1 à un instant t2 correspondant au commencement du cycle T2. Elle se retrouve ainsi au point C à un instant t2'=t2+DLYa et au point D à un instant t2"=t2+DLYb. Les instants t2' et t2" doivent impérativement se trouver dans le cycle T2 à défaut de quoi la donnée ne serait pas recopiée par les bascules FF2 et FF3 au commencement du cycle T3.

A la lumière de cet exemple, il apparaît que le temps de propagation le plus long d'une donnée, à travers un chemin asynchrone reliant deux éléments synchrones, détermine la fréquence maximale du signal d'horloge, soit sa période T minimale, cette règle étant bien connue des concepteurs de circuits intégrés. Il apparaît également que si un fraudeur injecte un front d'horloge parasite dans le signal d'horloge à un instant situé entre l'instant t2' et t2", une erreur sur la donnée DT se produit dans le circuit synchrone car la bascule FF2 recopie la donnée tandis que la bascule FF3 ne la recopie pas, puisque la donnée n'est pas encore parvenue jusqu'à son entrée.

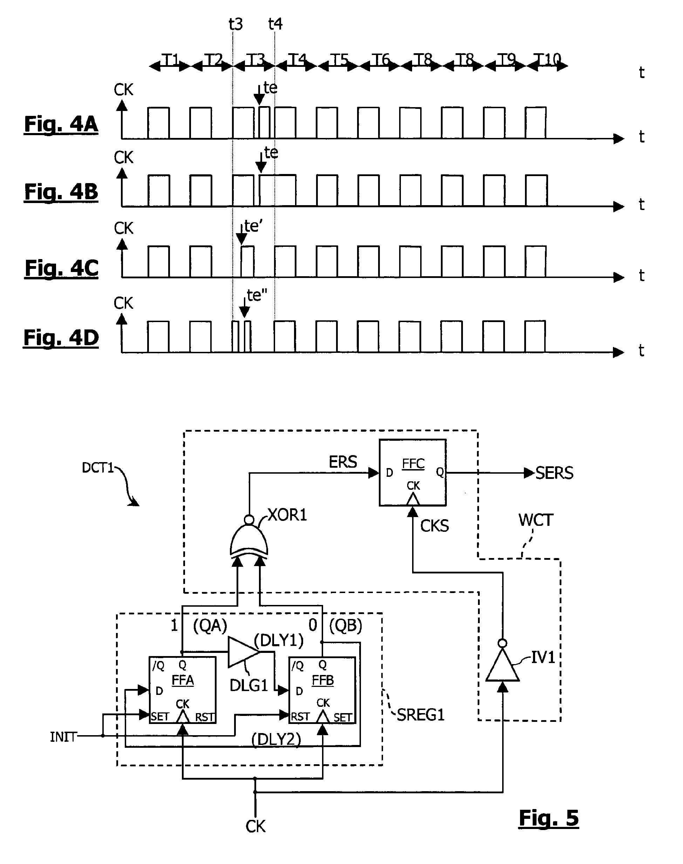

Les chronogrammes des figures 4A à 4D illustrent quatre types d'attaques sur le signal d'horloge CK pouvant conduire à une erreur de donnée :
- injecter un créneau positif : sur la figure 4A, un créneau parasite positif est injecté dans le signal d'horloge à l'instant te,
- avancer un front : sur la figure 4B, le front montant du créneau d'horloge du cycle T4 apparaît de façon anticipée à l'instant te au cours d'un cycle T3,
- retarder un front : sur la figure 4C, le front montant du créneau d'horloge CK du cycle T3 apparaît tardivement à un instant te' au cours du cycle T3, au lieu d'apparaître à un instant t3 situé au commencement de ce cycle, et
- injecter un créneau négatif : sur la figure 4A, un créneau parasite négatif est injecté dans un créneau d'horloge, ce qui provoque la division du créneau d'horloge en deux créneaux positifs distincts, le second apparaissant à un instant te" du cycle T3 et pouvant être considéré comme un créneau positif parasite.

De façon générale, ces diverses attaques visent à rapprocher deux fronts actifs du signal d'horloge afin de provoquer le déclenchement successif du circuit synchrone avec un intervalle de temps qui est inférieur au temps de propagation le plus long d'une donnée au sein du circuit. Chacun des cas représenté correspond ainsi à une accélération du signal d'horloge au delà d'un seuil de rapprochement des créneaux pouvant être toléré, et à une fréquence de fonctionnement supérieure à la fréquence de fonctionnement maximale du circuit synchrone.

Pour contrer de telles attaques, les procédés habituellement mis en oeuvre consistent à détecter une anomalie dans les données fournies par les circuits synchrones concernés. Ces procédés reposent par exemple sur une redondance logicielle ou matérielle des circuits susceptibles d'attaque. La redondance logicielle consiste dans le fait de recalculer au moyen d'un programme le résultat fournit par un circuit synchrone, le calcul redondant étant effectué par un microprocesseur. Par ailleurs, la redondance matérielle consiste à reproduire en plusieurs exemplaires les parties "sensibles" d'un circuit synchrone, et de comparer les résultats fournis par les circuits redondants, le résultat majoritaire pouvant être retenu comme résultat fiable en cas de divergence de résultats. De façon générale, ces procédés entrainent une occupation importante de la surface de semi-conducteur disponible (redondance matérielle) ou un ralentissement notable du fonctionnement des circuits synchrones (redondance logicielle).

La présente invention propose une solution tout à fait différente. Au lieu de détecter une erreur de donnée consécutive à une injection d'erreur, qui constitue l'effet second de l'injection d'erreur, l'invention propose de détecter l'effet premier de l'injection d'erreur, c'est-à-dire l'apparition d'une anomalie dans le signal d'horloge, soit la détection d'une accélération de celui-ci.

Ainsi, l'invention prévoit un procédé de détection d'une accélération d'un signal logique se traduisant par un rapprochement, au-delà d'un seuil de rapprochement, d'au moins deux fronts de variation d'un type déterminé du signal logique, comprenant les étapes consistant à prévoir au moins un premier bit de contrôle et un second bit de contrôle et conférer une valeur initiale au premier bit de contrôle et une valeur initiale au second bit de contrôle, à chaque front du type déterminé du signal logique, inverser la valeur du premier bit de contrôle après un premier délai et inverser la valeur du second bit de contrôle après un second délai inférieur au premier, et détecter une accélération quand les bits de contrôle ne présentent pas en même temps leurs valeurs initiales respectives ou leurs valeurs initiales respectives inversées.

Selon un mode de réalisation, le procédé comprend les étapes consistant à produire un signal d'erreur asynchrone ayant une valeur inactive et une valeur active, et porter le signal d'erreur asynchrone à la valeur active quand les deux bits de contrôle ne présentent pas en même temps leurs valeurs initiales respectives ou leurs valeurs initiales respectives inversées, et échantillonner le signal d'erreur asynchrone après chaque front de variation du type déterminé du signal logique, afin de filtrer des erreurs de synchronisation tolérées des deux bits de contrôle et de produire un signal d'erreur synchrone.

Selon un mode de réalisation, le procédé comprend une étape consistant à rafraîchir cycliquement le signal d'erreur synchrone en synchronisation avec des fronts de variation du signal logique d'un type inverse au type déterminé, descendants ou montants.

Selon un mode de réalisation, le procédé comprend les étapes consistant à prévoir au moins une première bascule synchrone cadencée par le signal logique et une seconde bascule synchrone cadencée par le signal logique, charger la valeur initiale du premier bit de contrôle dans la première bascule et la valeur initiale du second bit de contrôle dans la seconde bascule, et configurer les bascules pour qu'à chaque front du type déterminé du signal logique, la valeur du premier bit de contrôle s'inverse après le premier délai et la valeur du second bit de contrôle s'inverse après le second délai.

Selon un mode de réalisation, l'étape de configuration des bascules comprend les étapes consistant à relier une sortie de données de la première bascule à une entrée de données de la seconde bascule par l'intermédiaire d'un circuit à retard introduisant le premier délai, et relier ou connecter une sortie de données de la seconde bascule à une entrée de données de la première bascule.

Selon un mode de réalisation, l'étape de configuration des bascules comprend les étapes consistant à relier une sortie de données de la première bascule à une entrée de données de la première bascule par l'intermédiaire d'un circuit à retard introduisant le premier délai, et relier ou connecter une sortie de données de la seconde bascule à une entrée de données de la seconde bascule.

Selon un mode de réalisation, l'étape de chargement des bits de contrôle comprend une étape consistant à initialiser chaque bascule avec un signal de mise à 0 ou de mise à 1 de la bascule.

Selon un mode de réalisation, le signal logique est un signal d'horloge.

Selon un mode de réalisation, le premier délai est au moins égal à un retard maximal de propagation asynchrone d'une donnée entre deux éléments synchrones cadencés par le signal d'horloge.

Selon un mode de réalisation, le second délai est nul.

L'invention concerne également un dispositif de détection d'une accélération d'un signal logique, comprenant au moins une première bascule synchrone cadencée par le signal logique, recevant un premier bit de contrôle, et une seconde bascule synchrone cadencée par le signal logique, recevant un second bit de contrôle, les bascules étant agencées de manière qu'à chaque front du type déterminé du signal logique, la valeur du premier bit de contrôle s'inverse après un premier délai et la valeur du second bit de contrôle s'inverse après un second délai, des moyens pour charger une valeur initiale du premier bit de contrôle dans la première bascule et une valeur initiale du second bit de contrôle dans la seconde bascule, et des moyens pour fournir un signal d'erreur représentatif d'une accélération quand les deux bits ne présentent pas en même temps leurs valeurs initiales respectives ou leurs valeurs initiales respectives inversées.

Selon un mode de réalisation, les moyens pour détecter une accélération comprennent des moyens pour produire un signal d'erreur asynchrone ayant une valeur inactive et une valeur active, et porter le signal d'erreur asynchrone à la valeur active quand les deux bits de contrôle ne présentent pas en même temps leurs valeurs initiales respectives ou leurs valeurs initiales respectives inversées, et des moyens pour échantillonner le signal d'erreur asynchrone après chaque front de variation du type déterminé du signal logique, afin de filtrer des erreurs de synchronisation tolérées des deux bits de contrôle et de produire un signal d'erreur synchrone.

Selon un mode de réalisation, les moyens pour échantillonner le signal d'erreur asynchrone sont agencés pour rafraîchir cycliquement le signal d'erreur synchrone en synchronisation avec des fronts de variation du signal logique d'un type inverse au type déterminé, descendants ou montants.

Selon un mode de réalisation, une sortie de données de la première bascule est reliée à une entrée de données de la seconde bascule par l'intermédiaire d'un circuit à retard introduisant le premier délai, et une sortie de données de la seconde bascule est reliée à une entrée de données de la première bascule.

Selon un mode de réalisation, une sortie de données de la première bascule est reliée à une entrée de données de la première bascule par l'intermédiaire d'un circuit à retard introduisant le premier délai, et une sortie de données de la seconde bascule est reliée à une entrée de données de la seconde bascule.

Selon un mode de réalisation, chaque bascule comprend une entrée de mise à 0 ou de mise à 1 recevant un signal de contrôle pour charger dans la bascule la valeur initiale du bit de contrôle.

Selon un mode de réalisation, le dispositif comprend une entrée fournissant le signal logique à surveiller et connectée à un fil d'horloge d'un circuit synchrone.

Selon un mode de réalisation, premier délai est au moins égal à un retard maximal de propagation asynchrone d'une donnée entre deux éléments synchrones du circuit synchrone.

Selon un mode de réalisation, le second délai est nul.

L'invention concerne également un circuit synchrone comprenant des modules synchrones cadencés par un signal logique véhiculé par un arbre d'horloge, comprenant un dispositif de détection selon l'invention, pour détecter des accélérations dans le signal logique.

L'invention concerne également un circuit intégré comprenant des organes synchrones cadencés par un signal logique véhiculé par un bus d'horloge, et un dispositif de détection selon l'invention, pour détecter des accélérations dans le signal logique.

Ces objets, caractéristiques et avantages ainsi que d'autres de la présente invention seront exposés plus en détail dans la description suivante de divers modes de réalisation d'un dispositif de détection selon l'invention, faite à titre non limitatif en relation avec les figures jointes parmi lesquelles :
- la figure 1 précédemment décrite représente schématiquement un circuit synchrone comprenant un arbre d'horloge,
- la figure 2 précédemment décrite représente un circuit synchrone comprenant des chemins de données asynchrones,
- la figure 3A précédemment décrite représente un signal d'horloge appliqué au circuit synchrone et les figures 3B à 3E sont des chronogrammes représentant la propagation d'une donnée dans le circuit synchrone,
- les figures 4A à 4D précédemment décrites sont des chronogrammes représentant quatre types d'injection d'erreur conduisant à une accélération du signal d'horloge,
- la figure 5 représente un premier mode de réalisation d'un dispositif de détection selon l'invention, recevant un signal logique à surveiller,
- les figures 6A à 6H sont des chronogrammes illustrant le fonctionnement normal du dispositif de détection en l'absence d'erreur dans le signal surveillé,
- les figures 7A à 7H, 8A à 8H, 9A à 9H, 10A à 10H sont des chronogrammes illustrant le fonctionnement du dispositif de détection en réponse à une injection d'une erreur d'un premier type, d'un second type, d'un troisième type et d'un quatrième type, respectivement, dans le signal surveillé,
- la figure 11 représente une variante du dispositif de détection de la figure 5,
- la figure 12 représente un second mode de réalisation du dispositif de détection selon l'invention, et
- la figure 13 représente l'architecture d'un circuit intégré comprenant un dispositif de détection selon l'invention.

Dans les exemples qui viennent d'être décrits et dans l'ensemble de la présente demande, il est considéré que les fronts de variation du signal d'horloge provoquant le déclenchement des éléments synchrones d'un circuit synchrone, ou front actifs, sont des fronts montants. Toutefois, une convention inverse peut être retenue. Dans ce cas, ce qui est indiqué dans la présente demande au sujet des fronts montants concerne les fronts descendants.

La figure 5 représente un premier mode de réalisation DCT1 d'un dispositif de détection selon l'invention, comprenant un registre à décalage SREG1 et un circuit de surveillance WCT. Le dispositif DCT1 reçoit un signal logique à surveiller et est conçu pour détecter une éventuelle accélération de ce signal, se traduisant par un rapprochement de deux fronts montants au delà d'un seuil de rapprochement toléré. En relation avec le problème technique exposé au préambule, ce signal est ici le signal d'horloge CK appliqué à un circuit synchrone tel que celui représenté sur les figures 1 et 2. Le dispositif DCT1 est dans ce cas intégré à proximité du circuit synchrone, en tant qu'accessoire de sécurisation de celui-ci.

Le registre SREG1 comprend deux bascules FFA, FFB comprenant chacune une entrée de donnée D, une sortie de données Q, une sortie de données inverseuse /Q, une entrée d'horloge CK, une entrée SET de mise à 1 et une entrée RST de mise à 0. Les bascules FFA, FFB reçoivent le signal d'horloge CK sur leur entrée d'horloge. La sortie Q de la bascule FFA fournit un bit de contrôle QA et est reliée à l'entrée D de la bascule FFB par l'intermédiaire d'un circuit DLG1 introduisant entre la sortie Q et l'entrée D un retard DLY1 qui est de durée inférieure à la période T du signal d'horloge CK. La sortie Q de la bascule FFB fournit un bit de contrôle QB et est connectée à l'entrée D de la bascule FFA. Un signal INIT est appliqué à l'entrée SET de la bascule FFA et à l'entrée RST de la bascule FFB.

Le circuit de surveillance WCT comprend une porte XOR1 de type OU EXCLUSIF, une porte inverseuse IV1 et une bascule FFC. La porte XOR1 reçoit les bits de contrôle QA, QB et fournit un signal d'erreur asynchrone ERS dont la valeur active est ici 0. La porte inverseuse IV1 reçoit le signal d'horloge CK et fournit un signal d'échantillonnage CKS. Le signal CKS est appliqué à l'entrée d'horloge de la bascule FFC. Celle-ci reçoit le signal ERS sur son entrée D et le recopie sur la sortie à chaque front montant du signal CKS, pour fournir un signal d'erreur synchrone SERS dont la valeur active est également 0.

Le registre à décalage SREG1 présente des cycles de décalage T1, T2, T3, T4, T5,... de période égale à la période T du signal d'horloge CK. Lorsque le signal INIT est appliqué aux bascules, par exemple un front montant du signal INIT, un mot de contrôle comprenant des bits de contrôle QA, QB respectivement égaux à 1 et 0 est chargé dans le registre à décalage. Les bits QA, QB du mot de contrôle se propagent ensuite en boucle fermée dans le registre, de sorte que la valeur fournie par le registre est égale à 10, puis 01, puis de nouveau 10, etc. comme illustré par le tableau ci-après.

| | **QA** | **QB** |
|---|---|---|
| **INIT** | 1 | 0 |
| **Cycle T1** | 0 | 1 |
| **Cycle T2** | 1 | 0 |
| **Cycle T3** | 0 | 1 |
| **Cycle T4** | 1 | 0 |
| **...** | 0 | 1 |

Lorsque le registre contient l'une des valeurs 10 ou 01, le signal d'erreur ERS à la sortie de la porte XOR1 est égal à 1. Si l'une des combinaisons des bits de contrôle devient égale à "00" ou "11", le signal ERS passe à 0. Si l'erreur est persistante et existe encore lorsque le signal CKS présente un front montant, le signal SERS passe également à 0 indiquant ainsi qu'une accélération est intervenue dans le signal d'horloge CK. Une telle erreur est représentative d'une injection d'erreur dans signal d'horloge.

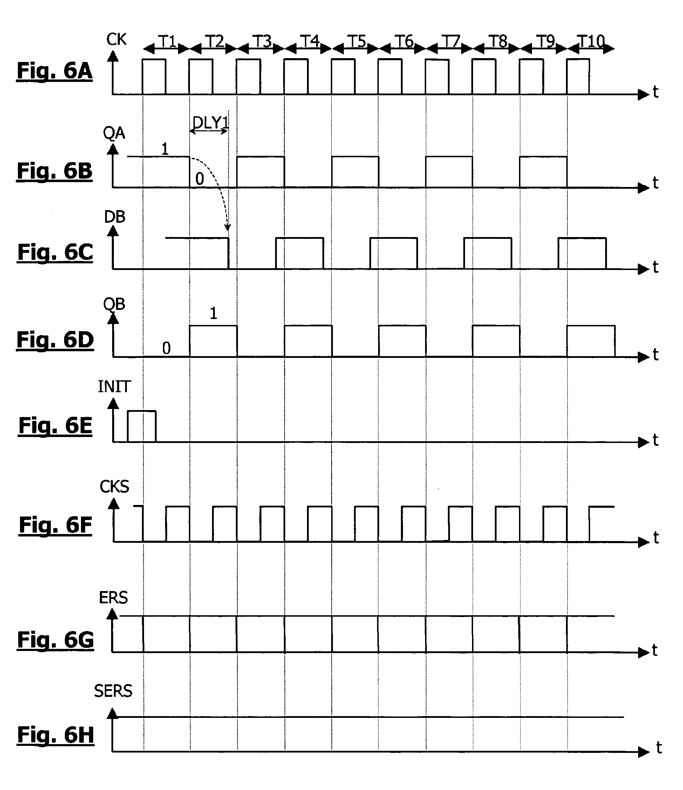

Le fonctionnement du dispositif DCT1 pendant des cycles T1, T2, T3, T4... du signal d'horloge est illustré par des chronogrammes sur les figures 6A à 6H, 7A à 7H, 8A à 8H, 9A à 9H, et 10A à 10H, dans lesquelles :
- les figures 6A à 10A représentent le signal d'horloge CK,
- les figures 6B à 10B représentent le bit de contrôle QA,
- les figures 6C à 10C représentent un bit DB présent à l'entrée D de la bascule FFA,
- les figures 6D à 10D représentent le bit de contrôle QB,
- les figures 6E à 10E représentent le signal INIT,
- les figures 6F à 10F représentent le signal d'échantillonnage CKS,
- les figures 6G à 10G représentent le signal d'erreur asynchrone ERS, et
- les figures 6H à 10H représentent le signal d'erreur synchrone SERS.

Les figures 6A à 6H illustrent le fonctionnement du dispositif DCT1 en l'absence d'erreur de synchronisation. Le mot de contrôle 10 est chargé dans le dispositif avant le cycle T1 au moyen du signal INIT. Les bits de contrôle QA, QB alternent de 1 à 0 ou de 0 à 1 à chaque front montant du signal CK de sorte que le registre contient les valeurs 1010 et 0101 en alternance. Le retard DLY1 tel que représenté est proche de la période T du signal d'horloge mais est inferieur à celle-ci, de sorte que le bit DB, qui recopie le bit de contrôle QA avec le retard DLY1, présente la bonne valeur au moment où le front montant suivant du signal CK apparaît. Ainsi, le bit de contrôle QB, qui recopie le bit DB au moment où le front montant suivant du signal CK apparaît, présente lui-même la bonne valeur (valeur de QA du cycle précédent).

Le signal d'erreur asynchrone ERS peut passer transitoirement à 0 (ou tendre vers 0) à chaque front montant du signal CK en raison des temps de commutation respectifs des bascules, qui peuvent être légèrement différents. Cette fluctuation de courte durée n'est pas reproduite par le signal SERS et est ainsi filtrée. En effet le signal d'erreur synchrone SERS est rafraichi à chaque front montant du signal CKS, qui correspond ici à un front descendant du signal CK (porte inverseuse IV1), soit 1/2 cycle d'horloge après le commencement de chaque cycle d'horloge si le signal CK présente un rapport cyclique égal à 0,5.

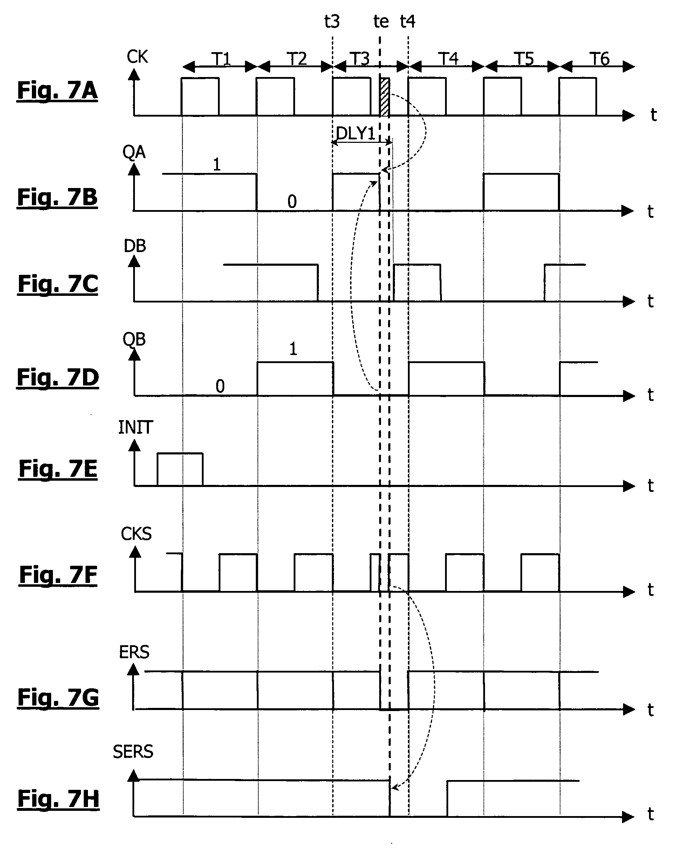

La réponse du circuit DCT1 aux quatre types d'injection d'erreur mentionnés plus haut est illustrée par les figures 7A à 10H.

Dans l'exemple illustré par les figures 7A à 7H, un créneau parasite positif est injecté dans le signal CK à un instant te du cycle T3, après que le créneau d'horloge du cycle T3 a été émis. Le créneau positif parasite provoque le passage à 0 anticipé du bit de contrôle QA tandis que le bit de contrôle QB reste égal à 0 car le bit DB n'est pas encore passé à 1 en raison du délai DLY1. Le signal d'erreur asynchrone ERS passe ainsi à 0. Le signal d'erreur synchrone SERS passe à 0 lorsque le créneau parasite disparaît (front montant du signal d'échantillonnage CKS). Au commencement du cycle T4 le bit de contrôle QB passe à 1 car le bit DB est égal à 1 en raison du retard DLY1. Le signal d'erreur ERS passe à 1 et le signal SERS passe à 1 au demi-cycle T4 (front montant suivant du signal d'échantillonnage CKS) de sorte que le dispositif de détection repasse dans un état de "non-erreur".

Le passage à 0 du signal d'erreur synchrone SERS étant transitoire, il doit être détecté et exploité en temps réel par un circuit de protection associé, ou par un sous-programme d'interruption, comme décrit plus loin, afin de provoquer une réaction immédiate visant la protection du circuit synchrone sous surveillance ou des organes qu'il contrôle.

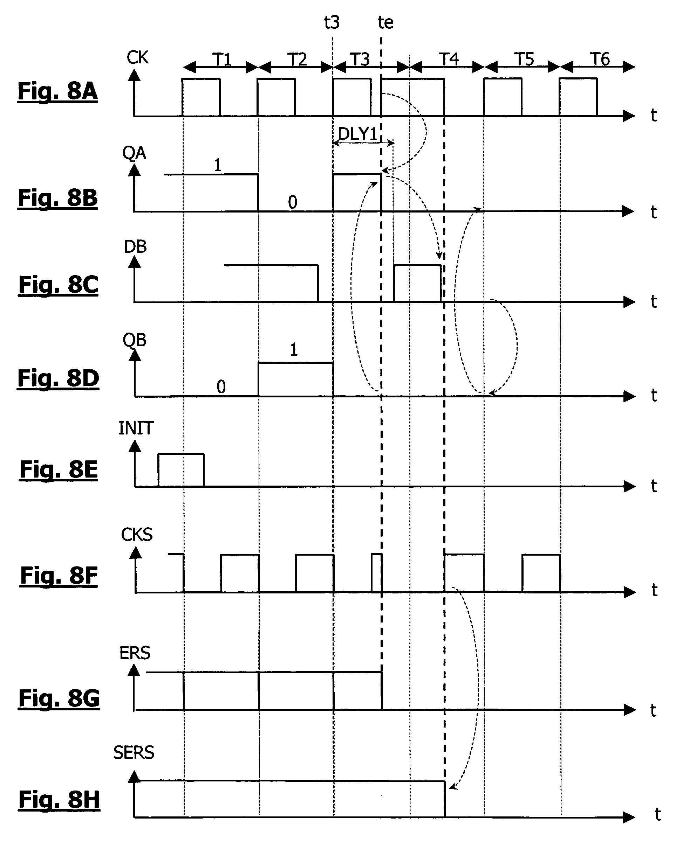

Dans l'exemple illustré par les figures 8A à 8H, le front montant du créneau d'horloge CK du cycle T4 apparaît à un instant te du cycle T3 au lieu d'apparaître à un instant t4 correspondant au commencement du cycle T4. L'apparition du front montant à l'instant te provoque des erreurs en cascade sur les deux bits de contrôle. Le bit de contrôle QA passe à 0 car le bit de contrôle QB est égal à 0 et le bit de contrôle QB reste égal à 0 car le bit DB n'est pas encore passé à 1 en raison du retard DLY1. Le signal d'erreur asynchrone ERS passe donc à 0. Au milieu du cycle T4, le signal CKS présente un front descendant et le signal d'erreur synchrone SERS passe à 0. Au commencement du cycle T5, le bit de contrôle QB reste égal à 0 car le bit DB est entre-temps passé à 0. Le bit de contrôle QA reste à 0 car le bit de contrôle QB est égal à 0. Les deux bits de contrôle sont donc définitivement égaux à 0 jusqu'à une nouvelle application du signal INIT.

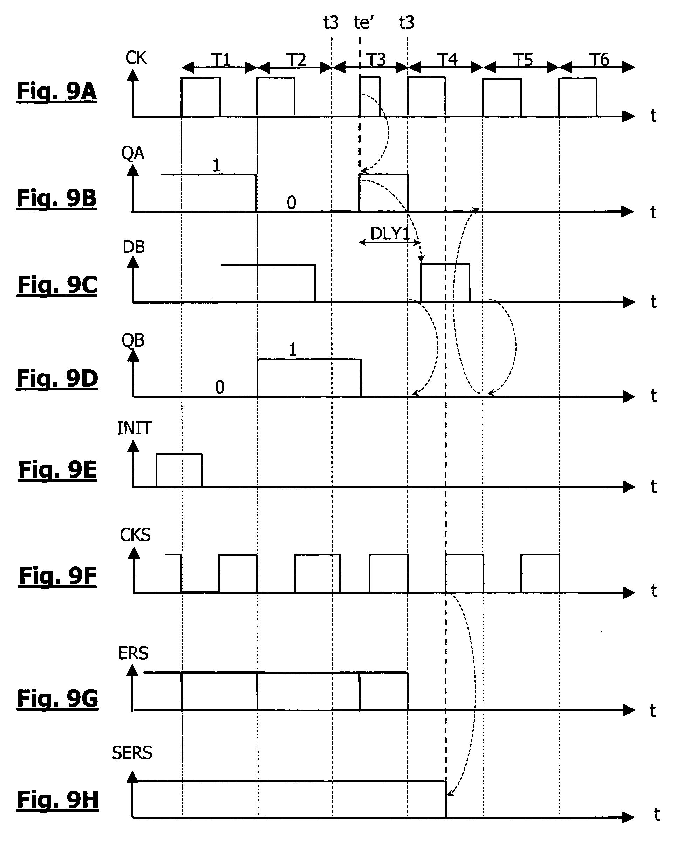

Dans l'exemple illustré par les figures 9A à 9H, le front montant du créneau d'horloge CK du cycle T3 est retardé et apparaît à un instant te' du cycle T3 au lieu d'apparaître à un instant t3 correspondant au commencement du cycle T3. L'apparition tardive du front montant provoque également une erreur en cascade sur les deux bits de contrôle. Le bit de contrôle QA passe à 1 car le bit de contrôle QB est égal à 0. Le bit QB passe à 0 car le bit DB n'est pas encore passé à 1 en raison du retard DLY1. L'erreur n'est pas encore détectée. Toutefois, au commencement du cycle T4, le bit de contrôle QA passe à 0 car le bit de contrôle QB est égal à 0. Simultanément le bit de contrôle QB reste à 0 car le bit DB n'est pas encore passé à 1 en raison du retard DLY1. Le signal d'erreur synchrone SERS passe donc à 0. Au milieu du cycle T4, le signal CKS présente un front descendant et le signal d'erreur asynchrone ERS passe à 0. Les deux bits de contrôle sont définitivement égaux à 0 jusqu'à une nouvelle application du signal INIT.

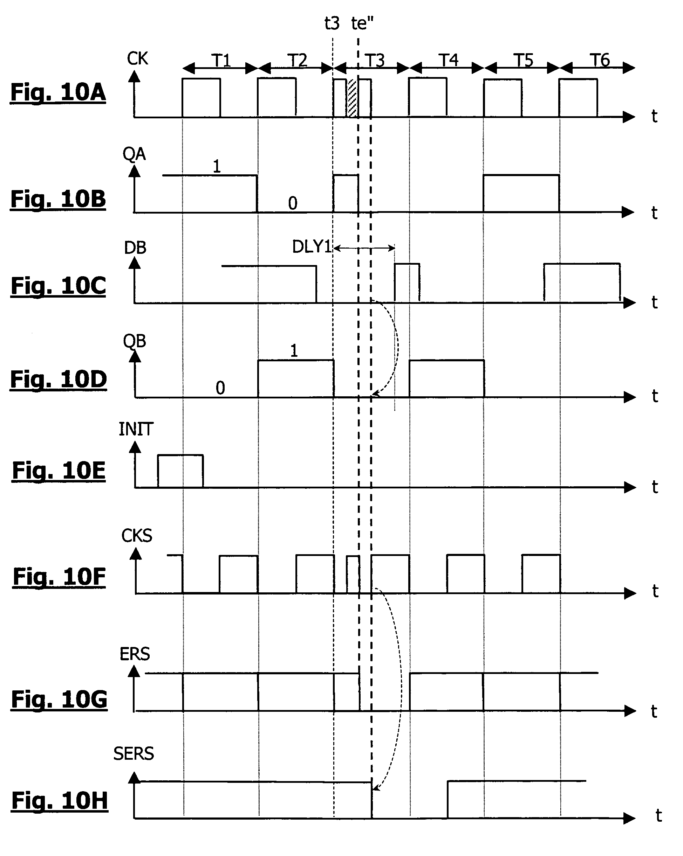

Dans l'exemple illustré par les figures 10A à 10H, un créneau parasite négatif est injecté dans le créneau d'horloge CK au cours du cycle T3. Le créneau négatif provoque la division du créneau d'horloge en deux créneaux positifs distincts, le second apparaissant à un instant te" du cycle T3 et formant un créneau positif parasite. Ce créneau positif parasite produit un effet similaire à celui du créneau parasite de la figure 7A. Il provoque le passage à 0 anticipé du bit de contrôle QA tandis que le bit de contrôle QB reste égal à 0 car bit DB n'est pas encore passé à 1. Le signal d'erreur asynchrone ERS passe ainsi à 0. Le signal d'erreur synchrone SERS passe à 0 lorsque le créneau parasite disparaît (front montant du signal d'échantillonnage CKS). Au commencement du cycle T4 le bit de contrôle QB passe à 1 car le bit DB est égal à 1 en raison du retard DLY1. Le signal d'erreur ERS passe à 1 et le signal SERS passe à 1 au demi-cycle T4 (front montant suivant du signal d'échantillonnage CKS) de sorte que le dispositif de détection revient à l'état de non-erreur.

Il ressort de ces chronogrammes que le retard DLY1 détermine un seuil de détection d'un rapprochement des fronts d'horloge et détermine ainsi la sensibilité du dispositif de détection aux accélérations du signal d'horloge CK. Si le délai DLY1 est petit devant la période T du signal d'horloge, certaines accélérations ne seront pas détectées. En pratique, et dans le cadre de l'application de l'invention à la surveillance du signal d'horloge d'un circuit synchrone, le retard DLY1 est de préférence égal au temps de propagation le plus long d'une donnée dans le circuit synchrone. Comme indiqué plus haut, ce temps de propagation le plus long est le temps de propagation le plus long d'une donnée à travers un chemin asynchrone reliant deux éléments synchrones.

Le dispositif de détection selon l'invention est susceptible de diverses variantes et modes de réalisation.

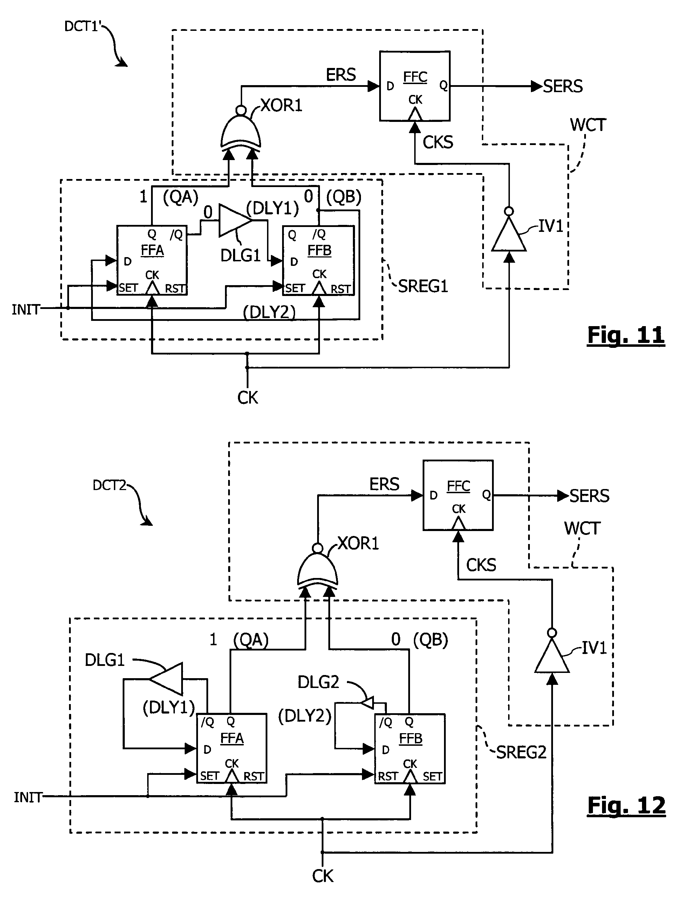

La figure 11 représente une variante DCT1' du dispositif de détection dans laquelle la sortie inverseuse /Q de la bascule FFA est reliée à l'entrée D de la bascule FFB par l'intermédiaire du circuit à retard DLG1, tandis que le bit de contrôle QA est fourni par la sortie Q de la bascule FFA. La sortie inverseuse /Q de la bascule FFB est connectée à l'entrée D de la bascule FFA et fournit le bit de contrôle QB. Le signal INIT est appliqué aux entrées SET de chaque bascule.

D'autres variantes de ce type peuvent être prévues par l'homme de l'art, par exemple en appliquant le signal INIT à l'entrée RST de chaque bascule.

La figure 12 représente un second mode de réalisation DCT2 du dispositif de détection. Le circuit de détection DCT2 comprend un circuit de surveillance WCT identique à celui du dispositif DCT1 et un registre à décalage SREG2. Bien que dénommé "registre à décalage", le registre SREG2 n'est pas à proprement parler un registre à décalage car les entrées et sorties des bascules FFA et FFB ne sont pas interconnectées. Ainsi la bascule FFA fournit le bit de contrôle QA sur sa sortie Q tandis que sa sortie inverseuse /Q est reliée à son entrée D par l'intermédiaire du circuit à retard DLG1. La bascule FFB fournit le bit de contrôle QB sur sa sortie Q tandis que sa sortie inverseuse /Q est reliée à son entrée D par l'intermédiaire d'un circuit à retard DLG2 présentant un délai DLY2 faible et négligeable. Comme précédemment, les bascules reçoivent chacune le signal d'horloge CK sur leur entrée d'horloge et le signal INIT sur leur entrée SET et RST, respectivement.

Le circuit DLG2 est prévu pour éviter une auto-oscillation de la bascule FFB pendant les périodes de commutation, en raison du rebouclage de la sortie /Q sur l'entrée D. Selon la structure de la bascule FFB et son temps de commutation, le circuit DLG2 peut n'être pas nécessaire. Dans ce cas le délai DLY2 est nul.

Bien que découplées, les bascules FFA, FFB fonctionnent de façon sensiblement similaire à ce qui a été décrit plus haut, le couple de bits de contrôle QA et QB passant alternativement de la valeur 01 à la valeur 10 et de la valeur 10 à la valeur 01 et présentant une valeur erronée 00 ou 11 en cas d'accélération du signal d'horloge.

Par ailleurs, en raison du découplage des bits de contrôle QA, QB, la valeur initiale du mot de contrôle n'est pas nécessairement 01 ou 10. La valeur initiale peut être 11 ou 00. Dans ce cas la porte XOR1 dans le circuit de surveillance WCT est remplacée par une porte NON OU EXCLUSIF afin de détecter les couples de valeur 01 et 10 comme représentatifs d'une accélération interdite du signal d'horloge. Il apparaît toutefois, après étude préliminaire, que la configuration "00" ou "11" du mot de contrôle pourrait ne pas permettre de détecter certaines attaques. Le meilleur mode de réalisation de l'invention semble donc celui qui utilise des valeurs inversées "01" ou "10" du mot de contrôle.

Il apparaîtra clairement à l'homme de l'art que le dispositif de détection selon l'invention est susceptible de diverses autres variantes et modes de réalisation. Ainsi, bien que l'on ait décrit dans ce qui précède des modes de réalisation dans lesquels le nombre de bascules du registre à décalage est réduit au minimum, le nombre de bascules peut au contraire être maximal si aucune contrainte d'encombrement n'est imposée au concepteur. Le registre à décalage selon l'invention peut comprendre des bascules redondantes, par exemple quatre bascules en cascade recevant à l'initialisation des bits de contrôle égaux à 0101 et formant un mot de contrôle dont les valeurs successives sont 0101 et 1010.

Par ailleurs, l'utilisation de bascules synchrones du type décrit plus haut n'est pas indispensable pour la mise en oeuvre de l'invention. Le registre à décalage pourrait être réalisé par exemple à partir d'une mémoire volatile (mémoire RAM) contrôlée par un circuit logique cadencé par le signal d'horloge à surveiller qui fait transiter les bits du mot de contrôle d'une cellule mémoire à l'autre à chaque cycle d'horloge (avec application du retard DLY1 à la transition d'un bit de contrôle sur deux), ou qui inverse la valeur de chaque bit de contrôle à chaque cycle d'horloge (en appliquant le retard DLY1 à l'inversion d'un bit de contrôle sur deux).

La présente invention est également susceptible de diverses applications. Sur la figure 1, la représentation schématique conventionnelle des modules synchrones SM1-SM4 désigne tout type de circuit synchrone comme un microprocesseur ou un organe de microprocesseur, un circuit de calcul cryptographique ou une partie d'un tel circuit, un circuit de décodage d'adresse, un circuit lecture d'une mémoire ou une partie d'un tel circuit, etc.

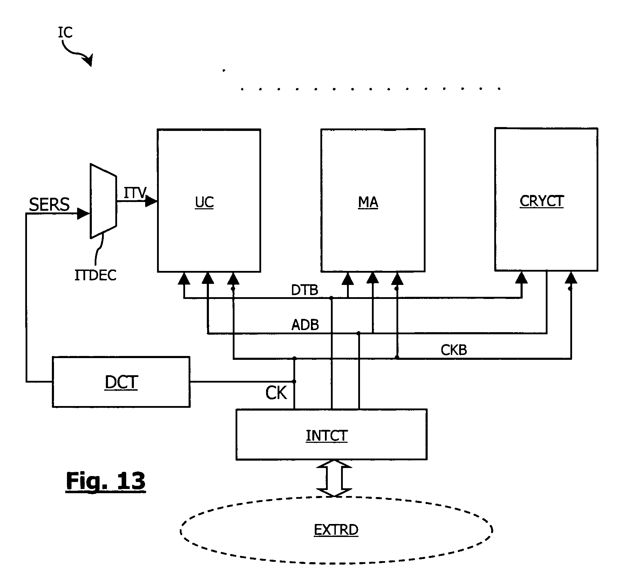

La figure 13 illustre un exemple d'application de l'invention à un circuit intégré IC pour carte à puce ou étiquette électronique. Le circuit intégré IC comprend une unité centrale UC de microprocesseur, un plan mémoire MA contenant des zones mémoire volatile (RAM) et des zones mémoire non volatile (ROM, EEPROM, FLASH...), un circuit de cryptographie CRYCT permettant au circuit intégré de s'authentifier au cours d'une transaction, et un circuit d'interface INTCT lui permettant de communiquer avec des lecteurs de carte à puce ou d'étiquette électronique externes (EXTRD). Le circuit d'interface INTCT peut être du type à contact et comprendre par exemple des contacts ISO 7816 (contacts d'horloge, de données, d'alimentation, de masse...). Le circuit d'interface INTCT peut aussi être du type sans contact RFID (Radio Frequency Identification) et comprendre une bobine d'antenne RF ou un circuit d'antenne UHF, des circuits de modulation et démodulation de données sortantes et entrantes, un circuit extracteur d'horloge, etc. L'unité centrale UC, le plan mémoire MA et le circuit CRYCT sont reliés par un bus de données DTB, un bus d'adresse ADB et un bus d'horloge CKB véhiculant un signal d'horloge CK. Dans une telle application, la source du signal d'horloge CK est généralement située dans le circuit d'interface (contact ISO 7816 fournissant le signal d'horloge ou circuit extrayant le signal d'horloge d'une porteuse RF ou UHF) mais peut aussi être implantée dans le circuit intégré si celui-ci possède une alimentation autonome en énergie électrique (pile électrique). L'arbre d'horloge est formé ici par les ramifications du bus d'horloge ainsi que des ramifications internes à chaque élément UC, MA, CRYCT qui ne sont pas représentées.

Le circuit intégré est équipé d'un circuit DCT selon l'invention, assurant la détection des accélérations du signal d'horloge CK. Le circuit DCT reçoit par exemple le signal CK prélevé à la sortie du circuit INTCT. Le circuit DCT fournit le signal d'erreur synchrone SERS qui est envoyé à l'unité centrale pour prendre des mesures d'urgence en réponse au passage du signal SERS à la valeur active. Ces mesures d'urgence peuvent être exécutées par un circuit de protection à logique câblée spécifiquement prévu à cet effet, qui peut par exemple provoquer une remise à zéro hardware de l'unité centrale, un effacement, une destruction ou un verrouillage de certaines parties du plan mémoire, etc. Les mesures d'urgence peuvent également être traitées par l'unité centrale en faisant basculer celle-ci dans un sous-programme dédié. Dans ce cas, et comme représenté, le signal d'erreur SERS est appliqué à un décodeur d'interruption ITDEC qui fournit à l'unité centrale UC un vecteur d'interruption ITV lorsque le signal d'erreur SERS présente la valeur active.

La présente invention est également susceptible de diverses applications autres que la surveillance d'un signal d'horloge et est applicable de façon générale à la surveillance de l'intégrité de tout type de signal logique, périodique ou non. Par exemple, lorsque des données sont envoyées à plusieurs éléments à travers un arbre de données, un dispositif de détection selon l'invention peut être utilisé pour détecter une corruption de données dans l'arbre de données par injection d'un créneau positif ou négatif, retard ou avance d'un front.

## Revendications

1. Procédé de détection d'une accélération d'un signal logique (CK) se traduisant par un rapprochement, au-delà d'un seuil de rapprochement, d'au moins deux fronts de variation d'un type déterminé du signal logique, **caractérisé en ce qu'**il comprend les étapes consistant à :
- prévoir au moins un premier bit de contrôle (QA) et un second bit de contrôle (QB) et conférer une valeur initiale au premier bit de contrôle et une valeur initiale au second bit de contrôle,
- à chaque front du type déterminé du signal logique, inverser la valeur du premier bit de contrôle (QA) après un premier délai (DLY1) et inverser la valeur du second bit de contrôle (QB) après un second délai (DLY2) inférieur au premier, et
- détecter une accélération quand les bits de contrôle ne présentent pas en même temps leurs valeurs initiales respectives ou leurs valeurs initiales respectives inversées.

2. Procédé selon la revendication 1, comprenant les étapes consistant à :
- produire un signal d'erreur asynchrone (ERS) ayant une valeur inactive et une valeur active, et porter le signal d'erreur asynchrone à la valeur active quand les deux bits de contrôle ne présentent pas en même temps leurs valeurs initiales respectives ou leurs valeurs initiales respectives inversées, et
- échantillonner le signal d'erreur asynchrone après chaque front de variation du type déterminé du signal logique, afin de filtrer des erreurs de synchronisation tolérées des deux bits de contrôle et de produire un signal d'erreur synchrone (SERS).

3. Procédé selon la revendication 2, comprenant une étape consistant à rafraîchir cycliquement le signal d'erreur synchrone en synchronisation avec des fronts de variation du signal logique (CK) d'un type inverse au type déterminé, descendants ou montants.

4. Procédé selon l'une des revendications 1 à 3, comprenant les étapes consistant à :
- prévoir au moins une première bascule synchrone (FFA) cadencée par le signal logique et une seconde bascule synchrone (FFB) cadencée par le signal logique,
- charger la valeur initiale du premier bit de contrôle (QA) dans la première bascule et la valeur initiale du second bit de contrôle (QB) dans la seconde bascule,
- configurer les bascules pour qu'à chaque front du type déterminé du signal logique, la valeur du premier bit de contrôle s'inverse après le premier délai et la valeur du second bit de contrôle s'inverse après le second délai.

5. Procédé selon la revendication 4, dans lequel l'étape de configuration des bascules comprend les étapes consistant à :
- relier une sortie de données (Q, /Q) de la première bascule (FFA) à une entrée de données (D) de la seconde bascule (FFB) par l'intermédiaire d'un circuit à retard (DLG1) introduisant le premier délai, et
- relier ou connecter une sortie de données (Q, /Q) de la seconde bascule (FFB) à une entrée de données de la première bascule (FFA).

6. Procédé selon la revendication 4, dans lequel l'étape de configuration des bascules comprend les étapes consistant à :
- relier une sortie de données (Q, /Q) de la première bascule (FFA) à une entrée de données (D) de la première bascule (FFA) par l'intermédiaire d'un circuit à retard (DLG1) introduisant le premier délai, et
- relier ou connecter une sortie de données (Q, /Q) de la seconde bascule (FFB) à une entrée de données (D) de la seconde bascule (FFB).

7. Procédé selon l'une des revendications 5 et 6, dans lequel l'étape de chargement des bits de contrôle comprend une étape consistant à initialiser chaque bascule avec un signal (INIT) de mise à 0 ou de mise à 1 de la bascule.

8. Procédé selon l'une des revendications 1 à 7, dans lequel le signal logique (CK) est un signal d'horloge.

9. Procédé selon la revendication 8, dans lequel le premier délai (DLY1) est au moins égal à un retard maximal de propagation asynchrone d'une donnée entre deux éléments synchrones cadencés par le signal d'horloge.

10. Procédé selon l'une des revendications 1 à 9, dans lequel le second délai (DLY2) est nul.

11. Dispositif (DCT, DCT1, DCT2) de détection d'une accélération d'un signal logique (CK), **caractérisé en ce qu'**il comprend :
- au moins une première bascule synchrone (FFA) cadencée par le signal logique, recevant un premier bit de contrôle (QA), et une seconde bascule synchrone (FFB) cadencée par le signal logique, recevant un second bit de contrôle (QB), les bascules étant agencées de manière qu'à chaque front du type déterminé du signal logique, la valeur du premier bit de contrôle (QA) s'inverse après un premier délai (DLY1) et la valeur du second bit de contrôle (QB) s'inverse après un second délai (DLY2),
- des moyens (INIT, SET, RST) pour charger une valeur initiale du premier bit de contrôle (QA) dans la première bascule et une valeur initiale du second bit de contrôle (QB) dans la seconde bascule, et
- des moyens (WCT) pour fournir un signal d'erreur représentatif d'une accélération quand les deux bits ne présentent pas en même temps leurs valeurs initiales respectives ou leurs valeurs initiales respectives inversées.

12. Dispositif selon la revendication 11, dans lequel les moyens (WCT) pour détecter une accélération comprennent :
- des moyens (XOR1) pour produire un signal d'erreur asynchrone (ERS) ayant une valeur inactive et une valeur active, et porter le signal d'erreur asynchrone à la valeur active quand les deux bits de contrôle ne présentent pas en même temps leurs valeurs initiales respectives ou leurs valeurs initiales respectives inversées, et
- des moyens (FFC, IV1) pour échantillonner le signal d'erreur asynchrone après chaque front de variation du type déterminé du signal logique, afin de filtrer des erreurs de synchronisation tolérées des deux bits de contrôle et de produire un signal d'erreur synchrone (SERS).

13. Dispositif selon la revendication 12, dans lequel les moyens (FFC, IV1) pour échantillonner le signal d'erreur asynchrone sont agencés pour rafraîchir cycliquement le signal d'erreur synchrone en synchronisation avec des fronts de variation du signal logique (CK) d'un type inverse au type déterminé, descendants ou montants.

14. Dispositif (DCT1) selon l'une des revendications 11 à 13, dans lequel :
- une sortie de données (Q, /Q) de la première bascule (FFA) est reliée à une entrée de données (D) de la seconde bascule (FFB) par l'intermédiaire d'un circuit à retard (DLG1) introduisant le premier délai, et
- une sortie de données (Q, /Q) de la seconde bascule (FFB) est reliée à une entrée de données (D) de la première bascule (FFA).

15. Dispositif (DCT2) selon l'une des revendications 11 à 13, dans lequel :
- une sortie de données (Q, /Q) de la première bascule (FFA) est reliée à une entrée de données (D) de la première bascule (FFA) par l'intermédiaire d'un circuit à retard (DLG1) introduisant le premier délai, et
- une sortie de données (Q, /Q) de la seconde bascule (FFB) est reliée à une entrée de données (D) de la seconde bascule (FFB).

16. Dispositif selon l'une des revendications 14 et 15, dans lequel chaque bascule comprend une entrée (SET, RST) de mise à 0 ou de mise à 1 recevant un signal de contrôle (INIT) pour charger dans la bascule la valeur initiale du bit de contrôle.

17. Dispositif selon l'une des revendications 11 à 16, comprenant une entrée fournissant le signal logique (CK) à surveiller et connectée à un fil d'horloge d'un circuit synchrone (SCT, SM, SM1-SM4).

18. Dispositif selon la revendication 17, dans lequel le premier délai (DLY1) est au moins égal à un retard maximal de propagation asynchrone d'une donnée entre deux éléments synchrones du circuit synchrone.

19. Dispositif selon l'une des revendications 11 à 18, dans lequel le second délai (DLY2) est nul.

20. Circuit synchrone (SCT) comprenant des modules synchrones (SM1-SM4) cadencés par un signal logique (CK) véhiculé par un arbre d'horloge, **caractérisé en ce qu'**il comprend un dispositif (DCT, DCT1, DCT2) de détection selon l'une des revendications 11 à 19, pour détecter des accélérations dans le signal logique (CK).

21. Circuit intégré (IC) comprenant des organes synchrones (UC, MA, CRYCT) cadencés par un signal logique (CK) véhiculé par un bus d'horloge (CKB), **caractérisé en ce qu'**il comprend un dispositif (DCT, DCT1, DCT2) de détection selon l'une des revendications 11 à 19, pour détecter des accélérations dans le signal logique.
